(19) **Europäisches Patentamt**
**European Patent Office**
**Office européen des brevets**

(11) Publication number: **0 302 935 B1**

(12) # EUROPEAN PATENT SPECIFICATION

(45) Date of publication of patent specification :
17.07.91 Bulletin 91/29

(51) Int. Cl.⁵ : **B60C 13/00, B29D 30/24**

(21) Application number : **87902154.1**

(22) Date of filing : **26.03.87**

(86) International application number :
**PCT/JP87/00188**

(87) International publication number :
**WO 87/05865 08.10.87 Gazette 87/22**

(54) **RADIAL TIRE FOR AIRCRAFT AND MANUFACTURING METHOD THEREOF.**

(30) Priority : 31.03.86 JP 74584/86
30.01.87 JP 21210/87

(43) Date of publication of application :
15.02.89 Bulletin 89/07

(45) Publication of the grant of the patent :
17.07.91 Bulletin 91/29

(84) Designated Contracting States :
**DE FR GB**

(56) References cited :
DE-A- 1 505 144
FR-A- 1 522 420
JP-A- 47 651
JP-A- 595 047
JP-A- 5 718 502
JP-A- 5 830 807
JP-A- 5 938 104

(56) References cited :
JP-A-59 349 05
JP-B- 5 535 256
JP-B- 5 719 015
JP-B- 5 726 942
JP-B-55 114 554
US-A- 3 540 511
US-A- 4 266 995

(73) Proprietor : **SUMITOMO RUBBER INDUSTRIES LIMITED**
No. 1-1, Tsutsui-cho 1-chome
Chuo-ku Kobe-shi Hyogo 651 (JP)

(72) Inventor : **UEYOKO, Kiyoshi**
2-10-2, Fukaeminami
Higashinari-ku Osaka-shi Osaka 537 (JP)

(74) Representative : **Stewart, Charles Geoffrey**
SP TYRES UK LIMITED Tyre Technical Division
Fort Dunlop Birmingham B24 9QT (GB)

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a radial tyre for aircraft in which the carcass ply does not become slack or abnormally tensioned in the portion in the bead region during building of the green tyre, so that the design strength of the carcass is not impaired, and allowing the breaking strength of the tyre to be increased without increasing the weight of the tyre. The invention also relates to a method for producing the tyre.

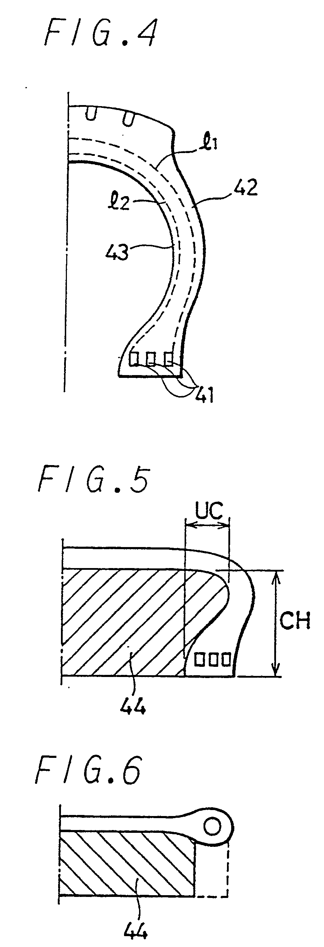

Hitherto, a tyre for large aircraft has had a bias ply construction wherein carcass plies are arranged in such a manner that the cords of each successive ply cross one another. Such a tyre has a plurality of beads 41 as shown in Fig. 4, which is a half sectional view. In the carcass plies there is a difference $\ell$ 1-$\ell$ 2 between the periphery (length between the beads) $\ell$ 1 of an outer carcass ply 42 and the periphery (length between the beads) $\ell$ 2 of an inner carcass ply 43 which is large. Thus unless the peripheries of the plies are pre-set to be as near as possible to the requirements in the vulcanised tyre then the same carcass ply cords become abnormally tight or contrarily become slack and thus a satisfactory tyre cannot be obtained. In order to prepare the peripheries to be those required in the vulcanised tyre a building drum 44 is used, as shown in Fig. 5 having a large crown height (CH) (normally 1.5 to 5 inches) and a deep under cut (UC) (normally 30 to 90 mm). The inner carcass ply is adhered to or applied around the drum surface and the outer side portions which then extend beyond the drum shoulder are turned down along the profile of the drum shoulder for the length range corresponding to the crown height. Later, after the beads are set, the side portions are turned up around the beads. The outer carcass ply is turned down along the inner carcass ply and is arranged to be underneath the beads. In the above operation, since the ply cords have a bias angle, the turn down operation causes only a change of the angle and does not cause troubles such as ply creases.

However, if the above conventional bias ply construction of the aircraft tyre is changed to a radial ply construction, there arises a big problem because a radial tyre, as is known well, has a construction wherein the cords of carcass plies are disposed radially (they are disposed at an angle of about 90 degrees, i.e. 80 to 90 degrees,) relative to the direction of the equator of the tyre. Thus in the turn-down operation of the radial plies at the drum shoulder using the above conventional drum having large crown height for building the bias tyre, no change of cord angle may be allowed and the carcass ply length in the circumferential direction of the drum does not become shorter. Accordingly the excess length causes ply creases. If a drum having a small crown height is used (Fig. 6) and even if a smaller ply peripheral length difference between the inner and the outer carcass plies and a single bead is used in order to avoid this problem, there is still a danger of the design strength of the carcass being impaired because in the green tyre shaping operation for adhering or applying a tread and breaker around a toroidally shaped carcass and or in the vulcanising operation, the rotation of the plies around the beads is large and this causes the plies in the region near to become slack or abnormally tight resulting in a bad tyre structure. More especially, in a tyre having an outer carcass ply which is turned down towards the inside around the beads, ply creases are even more likely to be formed. In addition, during the ply turnup stage and the green tyre shaping stage the beads need to be held firmly so that the beads can be maintained in their correct positions relative to the rotational axis of the tyre and cannot move. For this purpose, it is preferable that the building drum 44 has an axial width extending up to the position indicated by the dotted line in Fig. 6 and fully contacts the beads. However, if the both sides of the drum are extended to the above mentioned positions, the lengths for the turn-down of the outer carcass ply around the bead becomes insufficient. As a result, there is a risk that a defective engagement with a wheel rim is caused or the durability of the beads is impaired. Moreover, the creation of creases of the outer carcass ply due to the rotation of the ply in the green tyre shaping operation is accelerated. A tyre according to the preamble of claim 1 is known, e.g. from FR-A-1522420.

An object of the present invention is to provide a radial ply tyre for aircraft of the kind set forth in which the side carcass ply layer does not become slack or abnormally tight in the region of the beads in the green tyre shaping operation or the vulcanising operation.

Thus the finished tyre structure is as designed and accordingly the design strength of the carcass is not impaired. Also there is enough ply length to be correctly turned around the bead and thus there is no risk that a defective engagement with a wheel rim is caused or that the durability of the bead is impaired. Another object is to provide a method by which the above tyre for aircraft is produced efficiently.

Accordingly the invention provides a radial tyre for aircraft of the kind set forth, having the features recited in the characterizing portion of claim 1.

Thus the carcass ply does not become slack or abnormally tight in the region of the bead in the green tyre shaping operation or suchlike operation regardless of the radial ply construction, the design strength of the carcass is not impaired, and the desired durability can be obtained. Further, by virtue of the side carcass having a separate or two piece construction the breaking strength of the tyre can be increased without increasing the weight of the tyre.

The invention further provides a method for producing the radial tyre of claim 1, characterised in that there is used a cylindrical drum for tyre building which has an inflating means at the centre portion and has bead locking means capable of being increased or decreased in diameter located respectively adjacent to the above inflating means and at the drum shoulder portions on both sides of the above centre portion and ply turn up means on the outside in axial direction of the above bead locking means and the method comprises a step of assembling one or more side carcass ply layers, of organic fibre cords such as nylon or the like or inorganic fibre cords such as steel or the like disposed at an angle of 80 to 90 degrees relative to the direction of the equator of the tyre, onto the circumferential surfaces of the above drum shoulder portions and the circumferential surface of the above bead locking means a step of adhering one or more inner carcass ply layers comprising organic fibre cords such as nylon or the like or inorganic fibre cords such as steel or the like disposed at an angle of 80 to 90 degrees relative to the direction of the equator of the tyre, onto the circumferential surface of the above centre portion so that both side carcass plies are covered by the side portions thereof, a step of holding the bead by increasing the diameter of the bead locking means after positioning the bead above the bead locking means on each side, a step of shaping the inner carcass ply into a toroidal shape by inflating the inner carcass ply by means of the inflating means (18) and concurrently by moving both drum shoulder portions nearer to each other in the axial direction, a step of turning both side portions of the inner carcass ply and the side carcass plies radially outwards around the bead using the ply turn up means and of adhering them onto the inner carcass ply having a toroidal shape, and a step of attaching a band comprising a tread and a plurality of breaker layers comprising organic fibre cords such as nylon or the like or inorganic fibre cords of steel or the like disposed at an angle of 0 to 90 degrees relative to the direction to the direction of the equator of the tyre, onto the circumferential top region of the inner carcass ply having a toroidal shape and on the outer circumferential portions of the upper parts of both turned up side carcass plies by means of a transfer means.

Thus, by adhering or applying in advance the side carcass plies of a separate construction onto the circumferential surfaces of the drum shoulder portions in such a manner that each side carcass ply can reach a position on the axially inner side of the outer circumferential surface of the bead locking means, enough ply length around the bead can be obtained easily without requiring an additional process of ply turn down, and therefore there is no risk that a defective engagement with a rim is caused or the durability of the bead and the like is impaired. Further, the side carcass plies of a separate or two piece construction are adhered or applied to the layer of the inner carcass ply which has been shaped into a toroidal shape, and therefore the plies do not become slack or abnormally tense at the region near the bead, and a radial tyre for aircraft of which the tyre finish is satisfactory can be produced.

In order to describe the present invention in more detail, some embodiments will now be explained in conjunction with the accompanying drawings in which :

Fig. 1 is a sectional view of an aircraft radial tyre of the present invention ;

Fig. 2 is a front view partly in section of an apparatus for producing the aircraft radial tyre shown in Fig. 1.

Figs. 3 (a) to (i) are half sectional views showing a method of producing the aircraft radial tyre using the apparatus of Fig. 2.

Fig. 4. is a half sectional view showing a construction of a prior art aircraft tyre

Fig. 5 is an explanatory view of a tyre building operation using a conventional building drum having a high crown height.

and Fig. 6 is an explanatory view of a tyre building operation using a building drum having a low crown height.

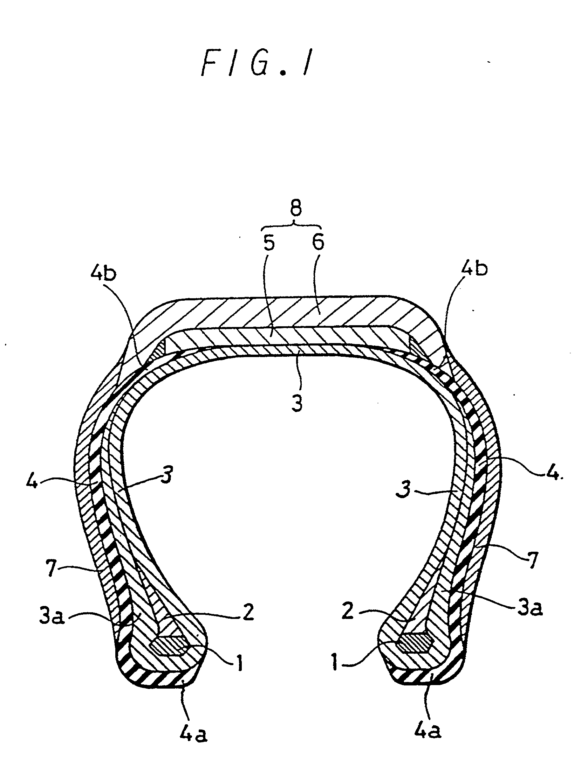

In Fig. 1. a radial tyre of sidewall over tread construction has a pair of bead rings (1) each of which serves is a core of a tyre bead portion which is to be attached to a wheel rim (not shown). Apeces 2 are fixed to the radially outer circumferences of the beads 1 to reinforce the bead and lower sidewall regions. One or more ply layers 3 (e.g. five layers) of an inner carcass ply comprising radially disposed cords of organic cords such as nylon, polyester or the like or inorganic fibre cords such as steel or the like are disposed at an angle of substantially 90 degrees (i.e between 80 to 90 degrees) relative to the direction of the equator of the tyre. These plies connect the above pair of beads 1,1 associated with the apices 2, by assuming a toroidal shape, with the two side portions 3A thereof being turned up respectively outwardly around the beads 1 and being terminated and adhered in the desired positions in the region between the lower parts and the upper part of the side walls. One or more (e.g. two layers) side carcass ply layers 4 are also provided. These ply layers 4 comprise radially disposed plies of organic fibre cords of nylon, polyester or the like or inorganic cords of steel or the like with the cords disposed at an angle of substantially 90 degrees (i.e. between 80 and 90 degrees) relative to the direction of the equator of the tyre. One edge 4a of the side ply layer 4 is turned down inwardly around the bead 1 and the other outer end 4b is adhered or applied to the outer surface of the inner carcass ply 3 in such a manner that the end 4b reaches the edge of the top or tread region of the tyre. The tread region is reinforced by a breaker 5 comprising layers of organic fibre cords such as nylon, polyester or the like or inorganic fibre cords such as steel or the like disposed at an angle of 0 to 90 degrees relative to the direction of the equator of the tyre (for example, cords of at least two layers crossing at an angle of 5 to 30 degrees and cord angles of all other layers are 0 degrees), which is adhered to the outer circumferential surface of the top region of the above inner carcass ply in such a manner that the other ends 4b, 4b of the side carcass plies are overlain by or covered by the sides of the breaker 5. A tread 6 is adhered onto the outer circumferential surface of the breaker 5 in such a manner that both ends thereof are laid on the upper portion of the side carcass plies. Sidewalls 7 are adhered respectively to each of the outer circumferential surfaces of the side carcass plies 4. The above breaker 5 and the tread 6 constitute a band 8.

It is notable that the side carcass ply 4 has one end 4a terminated at a position below the bead 1 so that it lies between the bead 1 and a rim (not shown in the drawings) when the tyre is used, and the other end 4b is held and fixed between the band 8 and the inner carcass ply 3. The inner end 4a of the side carcass ply 4 is terminated at any desired position within a zone from the bead toe to the position of the overall width of the tyre after being turned up inwardly around the bead portion. Further, there can be employed the so called tread over sidewall construction wherein the upper ends of the side walls 7 are located under the edge portions of the tread 6.

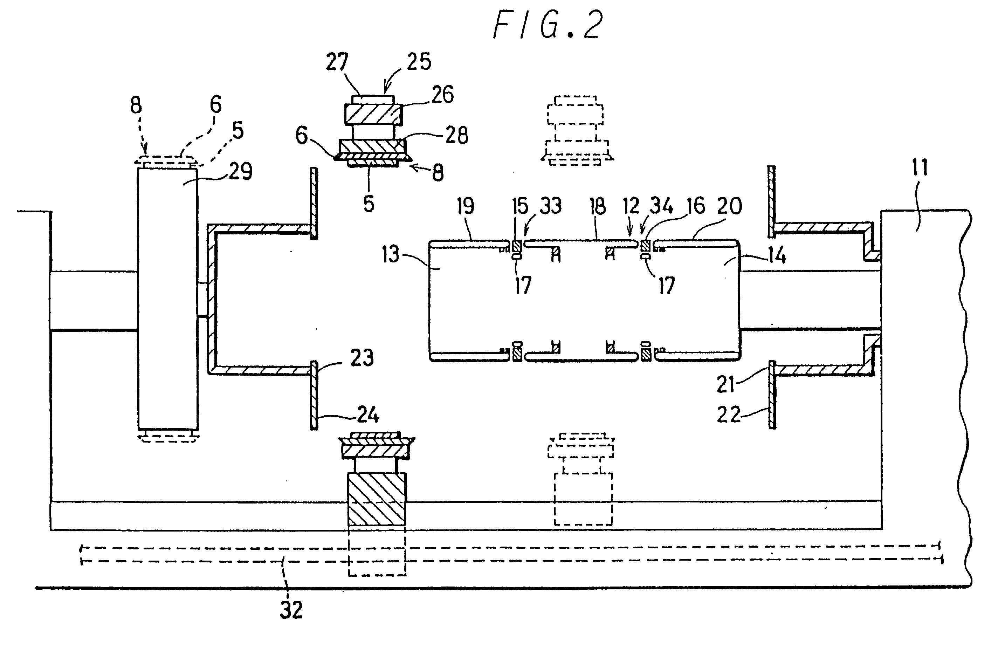

Fig. 2 shows a front view partly in section of an apparatus for producing the aircraft radial tyre with a sidewall over tread construction of Fig. 1. The apparatus comprises a headstock 11 and a flat type building drum 12 having a relatively low crown height rotatably supported in like a cantilever on the front of the headstock 11. The building drum 12 has a known construction and is rotatable by a driving mechanism provided in the headstock 11. The building drum 12 has left and right drum shoulder portions 13 & 14 each capable of being moved in the axial direction. The drum shoulder portions 13, 14 are equipped with bead locking units 15, 16 each having a ring shape. The bead locking units 15 & 16 are designed so that they may be expanded or contracted in the radial direction by air bags 17 provided on the inner circumferences thereof to retain the beads through the tyre components such as the inner carcass ply and the like when they are in an expanded position. Bead locking mechanisms, 33 & 34 are thus formed comprising the bead locking portions 15, 16 and the air bags, 17, 11. At the centre of the building drum 12 between the bead locking mechanisms 33 & 34, an inflating means, for example a folded air bag 18 is provided supported by a clamp ring which is not shown in the drawings. At the respective left right drum shoulder portions 13 & 14 the folded left rolling bag 19 and right rolling bag 20 to serve as ply turn up means are respectively supported by the drum shoulder portions (3 & 14). When fluid pressure is supplied to the air bag 18 the left rolling bag 19 and the right rolling bag 20 swell in the radial direction and form a shape like a fat ring or doughnut.

In another embodiment, there can be employed a so called bladderless method wherein the air bag 18 is not used but a fluid such as air is directly supplied to the inner carcass ply.

A right bead setter 21 which includes a permanent magnet is mounted so that it surrounds the right hand end of the building drum 12 and can move in the axial direction. The bead 1 associated with the apex 2 shown in Fig. 1 is held when required by the magnetic force.

In another embodiment, the apex 2 may be adhered or applied to the building drum at the shaping stage (for example, after the bead locking operation).

A right hand rolling bag pusher 22 is also provided having a shape like a ring which serves as a ply turning means and is fixed integrally to the circumference of the right hand setter 21. At the front of the headstock 11, there is provided a left hand bead setter 23 similar to the right hand bead setter 21 and capable of being moved in the axial direction. To the circumference of the above left hand bead setter 23, there is fixed a left hand rolling bag pusher 24 similar to the above right hand rolling bag pusher 22.

A transfer ring 25 which is movable in the axial direction by a driving means (indicated by dotted line) 32 (e.g. a screw shaft), is provided to serve as a band transfer means. The transfer ring 25 comprises a carrying ring 26 having a larger diameter than the outside diameter of the building drum 12 during shaping operations, and guides 27 which can move in the radial direction are positioned as bearers of multiple locations around the circumference of the carrying ring 26. Each guide 27 is connected to a piston rod of a cylinder, not shown in the drawings, and each guide 27 is movable synchronously in the radial direction by virtue of the action of these cylinders. A segment 28 having a circular arcuate shape and extending along the inner circumference of the carrying ring 26 is attached to the radially inner end of each guide 27. The transfer ring 25 can be moved by means of the driving means 32 within a range between the building drum 12 and a band building drum 29. The band building drum 29 is capable of increasing and decreasing in the diameter, and the breaker 5 and the tread 6 shown in Fig. 1 may be adhered together to form the band 8 in advance using the outer circumference of the band building drum 29.

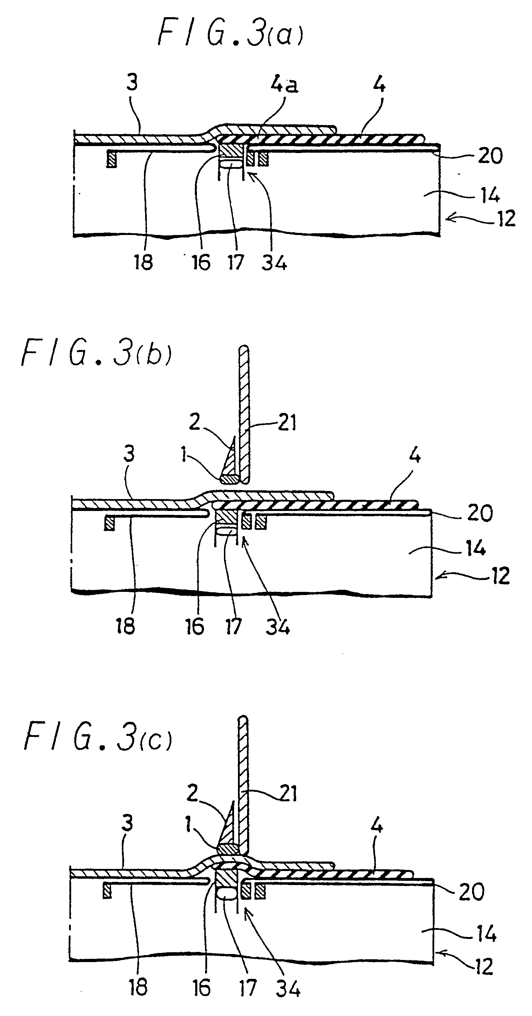

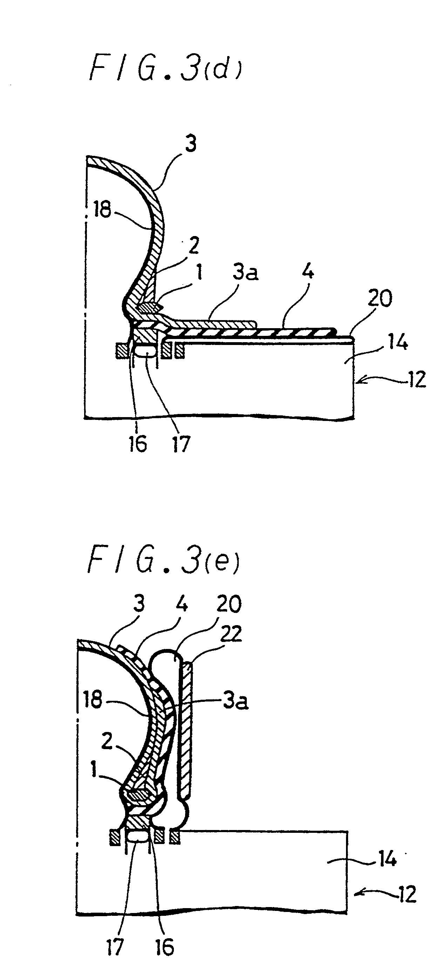

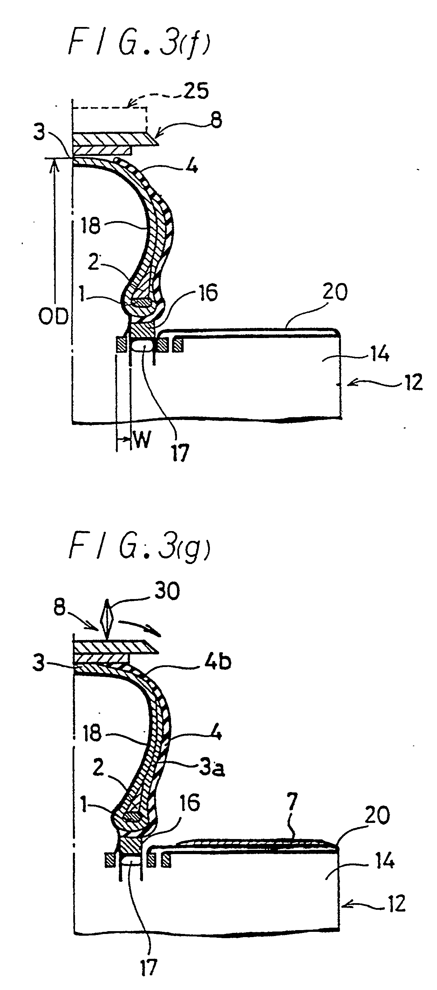

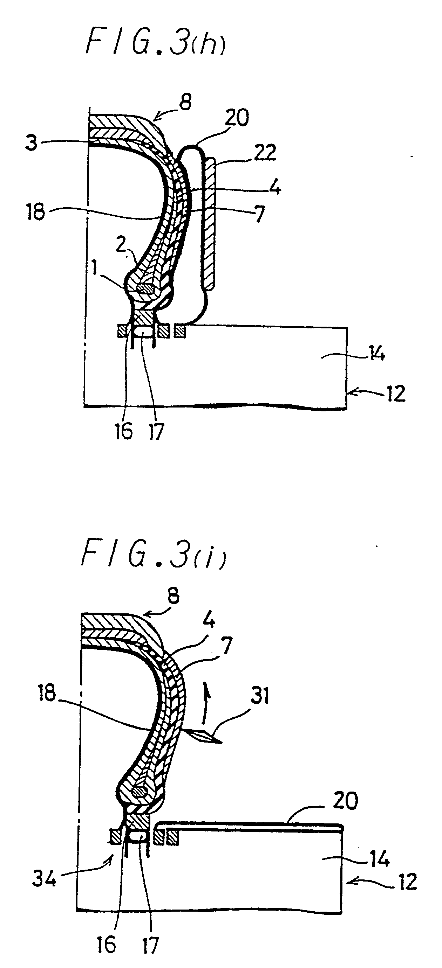

Now referring to Figs. 3 (a) through 3 (i) (partially sectional views showing a right side half of a tyre building apparatus of a single stage tyre) will be described (the first example method) of producing an aircraft radial tyre of the sidewall over tread construction such that ply creases are not caused in the region of the beads.

The steps are as follows :

(a) An inner liner, bead chafer and related components not shown in the drawings, are fitted to the circumferential surface of the building drum 12 whilst the drum 12 is rotated. Side carcass plies 4 are applied respectively to the circumferential surfaces of the drum shoulder portions 13, 14 on both the right and left hand sides such that one end 4a of each side carcass ply 4 covers a bead locking mechanism 33 or 34 and reaches the inner area of the outer circumferential surface thereof. Next, an inner carcass ply 3 is applied to the circumferential surface of the centre portion of the drum in such a manner that the side portions thereof are positioned on each of the above mentioned side plies. Thus there is formed an endless cylindrical ply (Fig. 3 (a)).

(b) At this time, the transfer ring 25, the bead setters 21, 23 on the right and left and the rolling bag pushers 22, 24 which are integral with the bead setters as shown in Fig. 2 are in their respective stand by positions indicated by solid lines. In addition, a band 8 is built in advance and retained on the band building drum 29 as indicated by dotted lines in the drawings. The above transfer ring 25 moves to a position above the band building drum 29, and the guides 27 project inwardly in the radial direction so that the multiple segments 28 at the ends of the guides hold the band 8. At the same time, the diameter of the band building drum 29 is reduced. The bead setters 21, 23 on the right and left hold the beads 1 with their associated apeces 2, and move forward to bead setting positions above the bead locking mechanisms 33, 34 as shown in Fig. 3 (b) to stand by.

(c) Then the bead locking mechanisms 33 & 34 are expanded by the air bags 17 to retain the beads 1 at predetermined positions acting through the side carcass plies 4 & the inner carcass ply 3 (Fig. 3 (c). Next, the bead setters 21, 23 on the right and left return to their original standby positions.

(d) A fluid is supplied to the air bag 18, and the drum shoulder portions 13, 14 on the right and left move closer to each other. Thus the inner carcass ply 3 is inflated torodially outward in the radial direction and the shaping operation thereof is achieved (Fig. 3 (d)).

(e) The rolling bags 19 & 20 on the right and left are inflated by supplying fluid pressure and then the rolling bag pushers 24, 22 move axially inwardly to the positions of the rolling bags 19 & 20. Thereby, both outer side portions 3a, 3a of the inner carcass ply and the side carcass plies 4, 4 are turned up around the beads and pressed onto the inner carcass ply 3 which has been shaped to the toroidal shape (Fig. 3 (e)). Thereafter, the rolling bags 19, 20 on the right and left sides contract, and the rolling bag pushers 24, 22 returning to the original standby positions.

(f) The drum shoulder portions 13, 14 move outwardly in the axial direction (the direction indicated by an arrow in Fig 3b) by a short distance w so as to become separated from each others, and the outside diameter OD of the toroidal carcass ply is reduced to allow the transfer ring 25 to surround the toroidal carcass ply. The transfer ring 25 holding the band as described in (a) moves up to the centre of the building drum 12, and stops thereat as shown by dotted lines in Fig. 2.

The axial centre of the transfer ring 25 coincides with the centre of the building drum 12 and thus the centring operation is completed.

(g) The drum shoulder portions 13, 14 then move again inwards in the axial direction by a short distance W so as to become closer to each other, and the outside diameter OD of the toroidal carcass ply is increased. Thereby the inner circumference of the band 8, held by the transfer ring 25, is brought into contact with the circumferential top region of the inner carcass ply and the circumferential upper portions 4b of the side carcass plies 4. Next see Fig. 3g, tread stitches 30 is moved in the direction indicated by the arrow, and the edge of the band 8 is pressed and stuck to the upper portions of the side carcass plies 4 and the inner carcass ply 3. Then the side walls 7, 7 are adhered to the circumferential surfaces of the contracted rolling bags 19 & 20 on the right and left sides of the drum shoulder portions 13, 14.

(h) The rolling bags 19, 20 are inflated again and the rolling bag pushers 24, 22 move closer to each other. Thus the rolling bags, 19, 20 pressed, and the side walls 7, 7 are applied to the side carcass plies 4, 4 (see Fig. 3h).

(i) After the rolling bags 19, 20 contract and the rolling bag pushers 24, 22 return to their original standby positions, a sidewall stitcher 31 is moved in the direction indicated by the arrow in Fig. 3i) and the side walls 7 are pressed onto the edge portions of the band 8 and the side carcass plies, 4. Finally, the fluid pressure in the air bag 18 is discharged, and the diameters of the bead locking mechanisms, 33, 34 are reduced by contraction of the air bags 17, and thereafter, the green tyre shaped in a toroidal shape is removed from the building drum 12.

The second example method for a tyre having a tread over sidewall construction is different from the above mentioned first example method in that the step of adhering of the side walls to the circumferential surfaces turning up and assembling to the side carcass plies is carried out after the completion of the above stage (e) turning up and adhering of the inner carcass ply and side carcass plies and before the start of stage (f) (reduction of the diameter of the inner carcass ply and positioning of the band) because of the tread over sidewall construction.

While in the above first and second example methods the side walls 7 are adhered to the circumferential surfaces of the rolling bags 19, 20 as shown in Fig. 3 (g) after the both side portions 3a, 3a of the inner carcass ply and side carcass plies 4 are turned up around the beads, the side walls 7 can be adhered to the under side surfaces of the side carcass plies polyethylene sheets being inserted in the third example method. In this third example method the upper half of each sidewall 7 is turned over and the above polyethylene sheets stripped off after the side walls together with the inner carcass ply and side carcass plies 4 are turned up around the beads as shown in Fig. 3 (e). Thus the band 8 is assembled to the side carcass plies 4 by means of the tread stitcher 30 as shown in Fig. (3g) and then the turned over portion of the side walls 7 can be assembled to the side carcass plies 4 and the edges of the band 8 by means of the sidewall stitcher 31.

A fourth example method is for a tyre having a tread over sidewall construction and is different from the third example method in that it is not necessary to insert polyethylene sheets when the side carcasses are adhered to the side walls at stage (a), and therefore stage (f) (reduction of the diameter of the inner carcass and positioning of the band) is carried our immediately after stage (e) (turning up and adhering of the inner carcass ply together with the side carcass plies), and there is no need for the step for turning over the side walls.

In a fifth example method for a tyre having sidewall over tread construction, there can be employed a process wherein the transfer ring holding the band is moved to the position in the middle of the building drum in before the start of the shaping of the inner carcass, and the outer ends of the inner carcass ply and the side carcass plies are turned up around the beads and are adhered to the toroidal inner carcass ply in the course of the shaping step, namely at a stage before the outer diameter of the inner carcass ply contacts the full width of the band. Then the shaping is completed and the full width of the band is attached to the circumferential top region of the inner carcass ply and onto the circumferential upper portions of the side carcass plies. Subsequently the side walls are adhered to the circumferential surfaces of the drum shoulder portions, and thereafter the side walls are raised by the rolling bags and assembled to the side carcasses and the edges of the tread.

Further, a sixth example method for a tyre having tread over sidewall construction is different from the above mentioned fifth example in that the step of adhering of the sidewall to the circumferential surfaces of the drum shoulder portions and of pressing to the side carcass plies is carried out next to the step of turning and adhering the inner carcass ply and the side carcass plies.

Still further, in a seventh example method for a tyre having sidewall over tread construction, there is employed a process wherein the side walls 7 are adhered to the under surface of the side carcass plies with polyethylene sheets inserted. Then the inner carcass ply is adhered to the circumferential surface in the middle of the building drum in such a manner that the side portions of the inner carcass ply are laid on the side carcass plies, and the band is moved to a position in the middle of the building drum by means of the transfer ring after the beads are retained by means of the bead locking mechanisms, then both side potions of the inner carcass ply, together with the side carcass plies and the side walls, are turned up around the beads in the course of the shaping operation. Subsequently the upper half of each sidewall is turned over and the polyethylene sheets are removed. Finally shaping is completed and the circumferential top region of the inner carcass ply and the circumferential upper portions of the side carcass plies are pressed the full width of the band, and the above mentioned turned over upper half portion of each sidewall is adhered to each edge of the tread.

An eighth example method for a tyre having tread over sidewall construction is different from the above mentioned seventh example method in that it is not necessary to insert polyethylene sheets when the side carcasses are adhered to the side walls at stage (a) and therefore immediately after the inner carcass ply is turned up around the beads together with the side carcasses and the side walls, the shaping is carried out and completed and the circumferential top portion of the inner carcass ply, the upper portions of the side carcasses and the upper portions of the side walls are pressed to the full width of the band and there is no need of a step for turning over of the upper half of each sidewall.

## Claims

1. A radial tyre for aircraft comprising in cross section of the tyre, one or more inner carcass ply layers (3) of organic fibre cords of nylon or the like or inorganic fibre cords of steel or the like disposed at an angle of 80 to 90 degrees relative to the direction of the equator of the tyre, the ends of which are respectively turned up outwardly around a pair of beads (1), a band (8) comprising a tread (6) and a plurality of breaker layers (5) of organic fibre cords of nylon or the like or inorganic fibre cords of steel or the like disposed at an angle of 0 to 90 degrees relative to the direction of the equator of the tyre, the band being adhered to the outer surface of the top region of the carcass ply (3) and side walls (7) adhered to the outer surfaces of both side portions (3a) of the inner carcass ply (3), the tyre has a pair of one or more side carcass ply layers (4) of organic fibre cords such as nylon or the like or inorganic fibre cords such as steel or the like disposed at an angle of 80 to 90 degrees relative to the direction of the equator of the tyre the side carcass ply layers (4) being disposed between the inner carcass ply (3) and the side walls (7), one end (4a) of each side carcass ply layer (4) being turned down inwardly around the bead (1) and the other end (4b) being positioned between the inner carcass ply (3) and the side of the breaker layer (5) of the band (8) such that the side carcass ply layers (4) have their other ends (4b) anchored to band (8), characterised in that said one end (4a) of the side carcass ply layer (4) is terminated within the region extending from the bead (1) to the position of the overall width of the tyre after being turned up inwardly around the bead.

2. A method for producing the radial tyre of claim 1 characterised in that there is used a cylindrical drum (12) for tyre building which has an inflating means (18) at the centre portion and has bead locking means (33, 34) capable of being increased or decreased in diameter located respectively adjacent to the above inflating means (18) and at the drum shoulder portions on both sides of the above centre portion and ply turn up means (19, 20) on the outside in axial direction of the above bead locking means, (33, 34) and the method comprises a step of assembling one or more side carcass ply layers, of organic fibre cords such as nylon or the like or inorganic fibre cords such as steel or the like disposed at an angle of 80 to 90 degrees relative to the direction of the equator of the tyre, onto the circumferential surfaces of the above drum shoulder portions (9, 20) and the circumferential surfaces of the above bead locking means (33, 34), a step of adhering one or more inner carcass ply layers, (3) comprising organic fibre cords such as nylon or the like or inorganic fibre cords such as steel or the like disposed at an angle of 80 to 90 degrees relative to the direction of the equator of the tyre, onto the circumferential surface of the above centre portion (18) so that both side carcass plies 4 are covered by the side portions thereof, a step of holding the bead by increasing the diameter of the bead locking means (33, 34) after positioning the bead above the bead locking means (33, 34) on each side, a step of shaping the inner carcass ply (3) into a toroidal shape by inflating the inner carcass ply (3) by means of the inflating means (19) and concurrently by moving both drum shoulder portions (13, 14) nearer to each other in the axial direction, a step of turning both side portions (3a) of the inner carcass ply (3) and the side carcass plies (4) radially outwards around the bead (1) using the ply turn up means and of adhering them onto the inner carcass ply (3) having a toroidal shape, and a step of attaching a band (9) comprising a tread (6) and a plurality of breaker layers (5) comprising organic fibre cords such as nylon or the like or inorganic fibre cords of steel or the like disposed at an angle of 0 to 90 degrees relative to the direction of the equator of the tyre, onto the circumferential top region of the inner carcass ply (3) having a toroidal shape and on the outer circumferential portions of the upper parts of both turned up side carcass plies by means of a transfer means (25).

3. The method of claim 2 for producing a radial tyre for aircraft characterised in that both side portions (3a) of the inner carcass ply (3) and the side carcass plies (4) are turned around the bead (1) and adhered to the toroidal inner carcass ply (3) and then the drum shoulder portions (13, 14) are moved apart in the axial direction by a short distance so that the outside diameter (OD) of the toroidal inner carcass ply (3) is reduced, and thereafter the band (8) comprising the breaker (5) and the tread (6) is positioned above the circumferential top region of the toroidal inner carcass ply (3) by means of the transfer means (25) subsequently the drum shoulder portions (13, 14) are moved inwardly in the axial direction by a short distance so the band (8) is adhered to the circumferential top region of the toroidal carcass ply (3) and to the outer circumferences of the upper portions of both turned up side carcass plies (3a).

4. The method of Claim 2 or Claim 3 for producing a radial tyre for aircraft characterised in that the side walls (7) are adhered to the circumferential surfaces (19, 20) of the drum shoulder portions (13, 14) on the right and left sides after the band (8) is adhered to the outer circumferences of the inner carcass ply (3) and to the outer circumferences of the upper portions of the both side carcass plies (3) subsequently the side walls (7) are again adhered to the above side carcass plies by means of the ply turn up means (19, 20).

5. The method of claims 2 or claim 3 for producing a radial tyre for aircraft characterised in that both side portions (3a) of the inner carcass ply (3) and the side carcass plies (4) are turned up outwardly around the beads (1) and are adhered to the toroidal inner carcass ply (3) and thereafter the side walls (7) are adhered to the circumferential surface of the drum shoulder portions (19, 20) on the right and left sides, and subsequently the side walls (2) are adhered to the above side carcass plies (4) bi means of the ply turn up means (19, 20).

6. A method for producing the radial tyre of claim 1 characterised in that there is used a cylindrical drum for tyre building which has an inflating means (18) at the centre portion (18) and has bead locking means (15, 16) capable of being increased or decreased in diameter located respectively adjacent to the above inflating means (18) and at the drum shoulder portions on both sides of the above centre portion (18) ply turn up means (19, 20) on the outside in the axial direction of the above bead locking means (15, 16), and the method comprises the step of adhering side walls (7) to the circumferential surfaces of the drum shoulder portions (19, 20) on the right and left sides, the step of adhering one or more side carcass ply layers onto the upper surface of each side wall with polyethylene sheet inserted there between the step of adhering one or more inner carcass ply layers onto the circumferential surface of the above centre portion (18) so that both side carcass plies are covered by the side portions thereof, the step of locking a bead (1) after positioning the bead above the bead locking means (15, 16) on each the step of shaping the inner carcass ply (3) into a toroidal shape by inflating the inner carcass ply by means of the inflating means (18) and conrurrently moving both drum shoulder portions (19, 20) nearer to each other in the axial direction, the step of turning up both side portions, (3a) of the inner carcass ply (3) and the side carcass plies (4) and the side walls (7) outwardly around the bead (1) and of adhering them to the inner carcass ply (3) having its toroidal shape, the step of turning over the upper half of each side wall and of stripping off the above polyethylene sheet, the step of positioning a band (8) comprising a breaker (5) and a tread (6) at a position above the circumferential top region of the inner carcass ply having its toroidal shape and of subsequently adhering the band (8) to the circumferential top region of the inner carcass ply (3) and to the outer circumferential portions of the upper parts of the both turned up side carcass plies (4), and the step of pressing and sticking the turned over portions of the side walls onto the side carcass plies and the edges of the bans (8).

7. The method of claim 6 for producing a radial tyre for aircraft characterised in that the drum shoulder portions (19, 20) on the right and left sides are moved by a short distance in the axial direction so as to become apart from each other so that the outside diameter of the toroidal inner carcass ply (3) is reduced after the upper half of each side wall is turned over and the polyethylene sheet is stripped off, and after the band (8) comprising the breaker (5) and the tread (6) is positioned above the circumferential top region of the toroidal inner carcass (3) the drum shoulder portions (19, 20) on the right and left sides are moved by short distances in the axial direction so as to become closer to each other so that the outside diameter of the toroidal inner carcass ply (3) is increased and the above band (8) is adhered to the circumferential top region of the toroidal inner carcass ply (3) and to the outside circumferential of the upper portions of the both side carcass plies (4).

8. A method for producing the radial tyre of claim 1 characterised in that there is used a cylindrical drum for tyre building which has an inflating means (18) at the centre portion and has bead locking means (15, 16) capable of being increased or decreased in diameter located respectively adjacent to the above inflating means (18) and at the drum shoulder portions on both sides of the above centre portion (18) and ply turn up means (19, 20) on the outside in axial direction of the above bead locking means (15, 16) and the method comprises the step of adhering side walls (7) to the circumferential surfaces of the drum shoulder portions (19, 20) on the right and left sides, the step of adhering one or more side carcass ply layers (3a) onto the circumferential surfaces of the above drum shoulder portion (19, 20) and the circumferential surface of the above bead locking means, (15, 16) on each the step of adhering one or more inner carcass ply layers onto the circumferential surface of the above centre portion (18) so that both side carcass plies are covered by the side portions thereof the step of locking a bead (1) by increasing the diameter of the bead locking means (15, 16) after positioning the bead (1) above the bead locking means (15, 16) on each side the step of shaping the inner carcass ply (3) into a toroidal shape by inflating the inner carcass ply (2) by means of the inflating means (18) and concurrently by moving both drum shoulder portions (15, 16) nearer to each other in the axial direction the step of turning up both side portions (3a) of the inner carcass ply (3) and the side carcass plies (4) outwardly around the bead (1) by the ply turn up means (19, 20) and of adhering them to the inner carcass ply (3) having a toroidal shape, and the step of positioning a band (8) comprising a breaker (5) and a tread (6) at the position above the circumferential top region of the inner carcass ply (3) having a toroidal shape of subsequently adhering the band (8) to the circumferential top region of the inner carcass ply (3) and to the outer circumferential portions of the upper parts of the both turned up side carcass plies (4).

9. The method of claim 8 for producing a radial tyre for aircraft characterised in that the drum shoulder portions (19, 20) on the right and left sides are moved by short distances in the axial direction so as to become apart from each other so that the outside diameter of the toroidal inner carcass ply (3) is reduced after both side portions (3a) of the inner carcass ply (3) and the side carcass plies (4) are turned up around the beads (1) and adhering to the toroidal inner carcass ply (3) and after the band comprising the breaker (5) and the tread (6) is positioned above the circumferential top region of the toroidal inner carcass ply (3) by means of the transfer means, the drum shoulder portions (19, 20) on the right and left sides are moved by short distances in the axial direction so as to become closer to each other so that the outside diameter of the toroidal inner carcass ply (3) is increased and the above band (8) is adhered to the circumferential top region of the toroidal inner carcass ply (3) and to the outside circumferential of the upper portions of the both side carcass plies (4).

10. A method for producing the radial tyre of claim 1, characterised in that there is used a cylindrical drum for tyre building which has an inflating means (18) at the centre portion and has bead locking means (15, 16) capable of being increased or decreased in diameter located respectively adjacent to the above inflating means (18) and at the drum shoulder portions (19, 20) on both sides of the above centre portion and ply turn up means on the outside in the axial direction of the above bead locking means (15, 16) and the method comprises the step of adhering one or more side carcass ply layers onto the above drum shoulder portions (19, 20) and the circumferential surface of the bead locking means (15, 16) on each both sides, the step of adhering one or more inner carcass ply layers (3) onto the circumferential surface of the above centre portion (18) so that both side carcass plies are covered by the side portions thereof, the step of locking a bead (1) by increasing the diameter of the bead locking means (15, 16) after positioning the bead (1) above the bead locking means (15, 16) on each the step of positioning the band (8) comprising the breaker (5) and the tread (6) at a position above the circumferential top region of the toroidal inner carcass ply (3) by means of a transfer means (25) the step of turning up the outer side portions (3A) of the inner carcass ply (3) and the side carcass plies (4) around the beads (1) and of adhering them to the toroidal inner carcass ply (3) at a stage before the outside diameter of the inner carcass ply (3) contacts with the full width of the band (8) in the course of the shaping operation of then inner carcass ply (3) into the toroidal shape by inflating the inner carcass ply (3) by means of the inflating means (18) and concurrently by moving the both drum shoulder portions (19, 20) nearer to each other in the axial direction, and step of completing the shaping operation and of pressing and sticking the full width of the band (8) onto the circumferential top region of the inner carcass ply (3) and the upper portions of the side carcass plies (4).

11. The method of claim 10 for producing a radial tyre for aircraft characterised in that side walls (7) are adhered to the circumferential surfaces of the drum shoulder portions (19, 20) on the right and left sides after the band (8) is adhered to the circumferential surfaces of the inner carcass ply (3) and on the outer circumferential of the upper portions of the both side carcass plies, subsequently the side walls (7) are adhered to the above side carcass plies by means of the ply turn means (19, 20).

12. The method of claim 10 for producing a radial tyre for aircrafts characterised in that the side walls (7) are adhered to the circumferential surfaces of the drum shoulder portions (19, 20) on the right and left sides after both side portions (3a) of the inner carcass ply (3) and the side carcass plies (4) are turned up around the beads (11) and adhered to the toroidal inner carcass ply (3) subsequently the side walls (7) are adhered to the above side carcass plies (4) by means of the ply turn up means (19, 20).

13. A method for producing the radial tyre of claim 1 characterised in that there is used a cylindrical drum for tyre building which has an inflating means (180 at the centre portion and has bead locking means (15, 16) capable of being increased or decreased in diameter located respectively adjacent to the above inflating means (18) and at the drum shoulder portions on both sides of the above centre portion and ply turn up means (19, 20) on the outside in axial direction of the above bead locking means (15, 16) wherein the method comprises the step of adhering the side walls (7) to the circumferential surfaces of the drum shoulder portions (19, 20) on the right and left sides, the step of adhering one or more side carcass ply layers (4) to the upper surface of each side wall (3) with polyethylene sheet being inserted, the step of adhering one or more inner carcass ply layers (3) to the circumferential surface of the above centre portion (18) so that the both side carcass plies are covered by the side portion thereof, the step of locking a bead by increasing the diameter of bead locking means (15, 16) after positioning the bead (1) above the bead locking means on each side, the step of positioning a band (8) comprising a breaker (5) and tread (6) at a position above the circumferential top region of the toroidal inner carcass ply (3) by means of a transfer means (25) the step of turning up the outer side portions (4a) of the inner carcass ply and the side carcass plies (4) around the beads (1) and of adhering them to the toroidal inner carcass ply (3) at the stage before the outside diameter of the inner carcass ply (3) contacts with the full width of the band (8) in the course of the shaping operation of the inner carcass ply into a toroidal shape by inflating the inner carcass ply by means of the inflating means (18) and concurrently by moving both drum shoulder portions (19, 20) nearer to each other in the axial direction, the step of turning over the upper half of each side wall and of stripping off the above polyethylene sheet, the step of completing the shaping operation and of pressing and sticking the full width of the band (8) onto the circumferential top region of the inner carcass ply (3) and the upper portions of the side carcass plies, (4) and step of pressing and sticking the turned over portions of the side walls (2) onto the side carcass plies (4) and the edges of the band (8).

14. A method for producing the radial tyre of claim 1 characterised in that there is used a cylindrical drum for tyre building which has an inflating means (18) at the centre portion and has bead locking means (15, 16) capable of being increased or decreased in diameter located respectively adjacent to the above inflating means (18) and drum shoulder portions (19, 20) on both sides of the above centre portion and ply turn up means (19, 20) on the outside in the axial direction of the above bead locking means (15, 16) and the method comprises the step of adhering side walls (7) to the circumferential surface of the drum shoulderportions (19, 20) on the right and left sides the step of adhering one or more side carcass ply layers (4) to the above drum shoulder portion (19, 20) and the circumferential surface of the bead locking means (19, 20) on each the step of adhering one or more inner carcass ply layers (3) to the circumferential surface of the above centre portion (18) so that the both side carcass plies are covered by the side portions thereof, the step of locking a bead 91 by increasing the diameter of the bead locking means (15, 16) after positioning the bead (1) above the bead locking means on each the step of positioning a band (8) comprising a breaker (5) and tread (6) at a position above the circumferential top region of the toroidal inner carcass ply (3) by means of a transfer means (25) the step of turning up the outer side portions (3a) of the inner carcass ply (3) the side carcass plies (4) and the side walls (7) around the beads (1) and of adhering them to the toroidal inner carcass ply (3) at a stage before the outside diameter of the inner carcass ply (3) contacts with the full width of the band (8) in the course of the shaping operation of the inner carcass ply into a toroidal shape by inflating the inner carcass ply by means of the inflating means (18) and concurrently by moving both drums shoulder portions (19, 20) nearer to each other in the axial direction, and the step of completing the shaping operation and of pressing and sticking the full width of the band (8) onto the circumferential top region of the inner carcass ply (3) and the upper portions of the side carcass plies (4).

## Patentansprüche

1. Radialreifen für Luftfahrzeug, der im Querschnitt des Reifens umfaßt eine oder mehrere innere Karkasslagenschicht(en) (3) aus organischen Faserkorden aus Nylon oder dergl. oder aus anorganischen Faserkorden aus Stahl oder dergl., die mit einem Winkel von 80 bis 90 Grad relativ zur Äquatorrichtung des Reifens angeordnet sind, deren Enden jeweils nach außen um ein Paar Wulste (1) nach oben geschlagen sind, ein Band (8), das einen Laufstreifen (6) und eine Vielzahl von Gürtellagen (5) aus organischen Faserkorden aus Nylon oder dergl. oder anorganischen Faserkorden aus Stahl oder dergl. umfaßt, die mit einem Winkel von 0 bis 90 Grad relativ zur Äquatorrichtung des Reifens angeordnet sind, wobei das Band an die Außenfläche des oberen Bereiches der Karkasslage (3) angehängt ist, und Seitenwände (7), die an die Außenflächen beider Seitenabschnitte (3a) der inneren Karkasslage (3) angehängt sind, wobei der Reifen ein Paar von je einer oder mehrerer Karkasschichtlage(n) (4) aus organischen Faserkorden wie Nylon oder dergl. oder anorganischen Faserkorden wie Stahl oder dergl. besitzt, die mit einem Winkel von 80 bis 90 Grad relativ zur Äquatorrichtung des Reifens angeordnet sind, die Seitenkarkasschichtlagen (4) zwischen der Innenkarkasslage (3) und den Seitenwänden (7) angeordnet sind, ein Ende (4a) jeder Seitenkarkassschichtlage (4) nach innen um den Wulst (1) nach unten geschlagen ist und das andere Ende (4b) zwischen der inneren Karkasslage (3) und der Seitenwand der Gürtelschicht (5) des Bandes (8) so angeordnet ist, daß die Seitenkarkasschichtlagen (4) ihre anderen Enden (4b) an dem Band (8) verankert haben, dadurch gekennzeichnet, daß das eine Ende (4a) der Seitenkarkasschichtlage (4) innerhalb des Bereiches endet, der sich von dem Wulst (1) zu der Stelle der Gesamtbreite des Reifens erstreckt, nachdem sie nach innen um den Wulst nach oben geschlagen ist.

2. Verfahren zur Herstellung des Radialreifens nach Anspruch 1, dadurch gekennzeichnet, daß eine zylindrische Trommel (12) zum Reifenaufbau verwendet wird, die ein Blähmittel (18) an dem Zentralabschnitt besitzt und Wulstrastmittel (33, 34) besitzt, die fähig sind, im Durchmesser erhöht oder vermindert zu werden und jeweils benachbart zu dem obigen Blähmittel (18) und an den Trommel-Schulterabschnitten an beiden Seiten des vorstehenden Zentralabschnitts angeordnet sind und Lagen-Aufschlagmittel (19, 20) in Axialrichtung an der Außenseite der obigen Wulstrastmittel (33, 34), und daß das Verfahren umfaßt einen Schritt des Anordnens einer oder mehrerer mit einem Winkel von 80 bis 90 Grad relativ zur Äquatorrichtung des Reifens angeordneter Karkassschichtlage(n) aus organischen Faserkorden wie Nylon oder dergl. oder anorganischen Faserkorden wie Stahl oder dergl. an den Umfangsflächen der vorstehenden Trommelschulterabschnitte (9, 20) und den Umfangsflächen des vorstehenden Wulstrastmittels (33, 34), einen Schritt des Anhängens einer oder mehrerer organische Faserkorde wie Nylon oder dergl. oder anorganische Faserkorde wie Stahl oder dergl. umfassender, mit einem Winkel von 80 bis 90 Grad relativ zur Aquatorrichtung des Reifens angeordneter innerer Karkasschichtlage(n) (3) an die Umfangsfläche des obigen Zentralabschnitts (18), so daß beide Seitenkarkasslagen (4) durch deren Seitenabschnitte bedeckt sind, einen Schritt des Haltens des Wulstes durch Erhöhen des Durchmessers des Wulstrastmittels (33, 34) nach Einsetzen des Wulstes über dem Wulstrastmittel (33, 34) an jeder Seite, einen Schritt des Formens der inneren Karkasslage (3) zu einer Toroidform durch Blähen der inneren Karkasslage (3) mittels des Blähmittels (19) und gleichzeitig durch Bewegen beider Trommelschulterabschnitte (13, 14) in Axialrichtung näher aneinander, einen Schritt des Umschlagens beider Seitenabschnitte (3a) der inneren Karkasslage (3) und der Seitenkarkasslagen (4) radial nach außen um den Wulst (1) unter Benutzung des Lagen-Aufschlagmittels und des Anhängens derselben an die innere, eine Toroidform besitzende Karkasslage (3) und einen Schritt des Anbringens eines Bandes (9), das einen Laufstreifen (6) und eine Vielzahl von Gürtelschichten (5) umfaßt, welche organische Faserkorde wie Nylon oder dergl. oder anorganische Faserkorde aus Stahl oder dergl. umfassen, die mit einem Winkel von 0 bis 90 Grad relativ zur Äquatorrichtung des Reifens angeordnet sind, an dem oberen Umfangsbereich der inneren Karkasslage (3) mit einer Toroidform und an den äußeren Umfangsabschnitten der oberen Teile der beiden nach oben geschlagenen Seitenkarkasslagen mittels eines Übertragungsmittels (25).

3. Verfahren nach Anspruch 2 zur Herstellung eines Radialreifens für Luftfahrzeug, dadurch gekennzeichnet, daß beide Seitenabschnitte (3a) der inneren Karkasslage (3) und die Seitenkarkasslagen (4) um den Wulst (1) geschlagen sind und an die toroidförmige innere Karkasslage (3) angehängt und dann die Trommelschulterabschnitte (13, 14) in Axialrichtung um einen kurzen Abstand so auseinanderbewegt werden, daß der Außendurchmesser (OD) der toroidförmigen inneren Karkasslage (3) reduziert wird, und danach das den Gürtel (5) und den Laufstreifen (6) umfassende Band (8) mittels des Übertragungsmittels (25) über den oberen Umfangsbereich der toroidförmigen inneren Karkasslage (3) gesetzt wird, daraufhin die Trommelschulterabschnitte (13, 14) in Axialrichtung um ein kurzes Stück nach innen bewegt werden, so daß das Band (8) an den oberen Umfangsbereich der toroidförmigen Karkasslage (3) und die Außenumfänge der oberen Abschnitte beider nach oben geschlagenen Seitenkarkasslagen (3a) angehängt wird.

4. Verfahren nach Anspruch 2 oder 3 zur Herstellung eines Radialreifens für Luftfahrzeug, dadurch gekennzeichnet, daß die Seitenwände (7) an die Umfangsflächen (19, 20) der Trommelschulterabschnitte (13, 14) an der rechten und linken Seitenwand angehängt werden, nachdem das Band (8) an die Außenumfänge der inneren Karkasslage (3) und die Außenumfänge der oberen Abschnitte der beiden Seitenkarkasslagen (3) angehängt wurden, daß nachfolgend die Seitenwände (7) wieder mittels der Lagen-Aufschlagmittel (19, 20) an die obigen Seitenkarkasslagen angehängt werden.

5. Verfahren nach Anspruch 2 oder 3 zur Herstellung eines Radialreifens für Luftfahrzeug, dadurch gekennzeichnet, daß beide Seitenabschnitte (3a) der inneren Karkasslage (3) und der Seitenkarkasslagen (4) nach außen um die Wulste (1) nach oben geschlagen und an die toroidförmige innere Karkasslage (3) angehängt werden und danach die Seitenwände (7) an die Umfangsfläche der Trommelschulterabschnitte (19, 20) an der rechten und der linken Seite angehängt werden und daraufhin die Seitenwände (2) mittels der Lagen-Aufschlagmittel (19, 20) an die obigen Seitenkarkasslagen (4) angehängt werden.

6. Verfahren zur Herstellung des Radialreifens nach Anspruch 1, dadurch gekennzeichnet, daß eine zylindrische Trommel zum Reifenaufbau benutzt wird, welche ein Aufblähmittel (18) an dem Zentralabschnitt (18) besitzt und Wulstrastmittel (15, 16) hat, die fähig sind, im Durchmesser erhöht oder vermindert zu werden und jeweils benachbart zu den obigen Aufblähmitteln (18) und an den Trommelschulterabschnitten an beiden Seiten des obigen Zentralabschnittes (18) angeordnet sind, und Lagen-Aufschlagmittel (18, 20) an der Außenseite in Axialrichtung der obigen Wulstrastmittel (15, 16), und daß das Verfahren umfaßt den Schritt des Anhängens von Seitenwänden (7) an die Umfangsflächen der Trommelschulterabschnitte (19, 20) an der rechten und linken Seite, den Schritt des Anhängens einer oder mehrerer Seitenschichtlage(n) an die obere Fläche jeder Seitenwand, mit dazwischen eingesetzter Polyethylenschicht, den Schritt des Anhängens einer oder mehrerer innerer Karkasschichtlage(n) an die Umfangsfläche des obigen Zentralabschnittes (18), so daß beide Seitenkarkasslagen durch die Seitenabschnitte derselben bedeckt sind, den Schritt des Rastens je eines Wulsts (1) nach Einsetzen des Wulsts über dem jeweiligen Wulstrastmittel (15, 16), den Schritt des Formens der inneren Karkasslage (3) in eine Toroidform durch Aufblähen der inneren Karkasslage mittels des Aufblähmittels (18) und gleichzeitigen Bewegens beider Trommelschulterabschnitte (19, 20) in der Axialrichtung näher zueinander, den Schritt des Aufschlagens beider Seitenabschnitte (3a) der inneren Karkasslage (3), der Seitenkarkasslage (4) und der Seitenwände (7) nach außen um den Wulst (1) und des Anhängens derselben an die ihre Toroidform besitzende innere Karkasslage (3), den Schritt des Überschlagens der oberen Hälfte jeder Seitenwand und des Abziehens der obigen Polyethylenschicht, den Schritt des Einsetzens eines einen Gürtel (5) und einen Laufstreifen (6) umfassenden Bandes (8) an einer Stelle über dem oberen Umfangsbereich der inneren Karkasschicht mit ihrer Toroidform und des darauffolgenden Anhängens des Bandes (8) an den oberen Umfangsbereich der inneren Karkasslage (3) und die äußeren Umfangsabschnitte der oberen Teile der beiden aufwärts geschlagenen Seitenkarkasslagen (4) und den Schritt des Pressens und Klebens der übergeschlagenen Abschnitte der Seitenwände an die Seitenkarkasslagen und die Kanten des Bandes (8).

7. Verfahren nach Anspruch 6 zum Herstellen eines Radialreifens für Luftfahrzeug, dadurch gekennzeichnet, daß die Trommelschulterabschnitte (19, 20) an der rechten und der linken Seite um einen kurzen Abstand in Axialrichtung bewegt werden, um voneinander so getrennt zu werden, daß der Außendurchmesser der toroidförmigen Innenkarkasslage (3) reduziert wird, nachdem die obere Hälfte jeder Seitenwand übergeschlagen und die Polyethylenschicht abgezogen wurde und nachdem das den Gürtel (5) und den Laufstreifen (6) umfassende Band (8) über den oberen Umfangsbereich der toroidförmigen inneren Karkasse (3) gesetzt ist, die Trommelschulterabschnitte (19, 20) an der rechten und linken Seite um kurze Abstände in Axialrichtung bewegt werden, um so näher aneinander zu kommen, so daß der Außendurchmesser der toroidförmigen Innenkarkasslage (3) erhöht wird und das obige Band (8) an den oberen Umfangsbereich der toroidförmigen Innenkarkasslage (3) und an den Außenumfangsbereich der oberen Abschnitte der beiden Seitenkarkasslagen (4) angehängt ist.

8. Verfahren zum Herstellen des Radialreifens nach Anspruch 1, dadurch gekennzeichnet, daß eine zylindrische Trommel zum Reifenaufbau verwendet wird, die ein Aufblähmittel (18) an dem Zentralabschnitt besitzt und Wulstrastmittel (15, 16) besitzt, die fähig sind, im Durchmesser erhöht und vermindert zu werden und jeweils benachbart zu dem obigen Aufblähmittel (18) und an den Trommelschulterabschnitten an beiden Seiten des obigen Zentralabschnittes (18) angeordnet sind, und Lagen-Aufschlagmittel (19, 20) an der Außenseite in Axialrichtung der obigen Wulstrastmittel (15, 16), und daß das Verfahren umfaßt den Schritt des Anhängens von Seitenwänden (7) an die Umfangsflächen der Trommelschulterabschnitte (19, 20) an der rechten und der linken Seite, den Schritt des Anhängens einer oder mehrerer Seitenkarkasschichtlage(n) (3a) an die Umfangsflächen des obigen Trommelschulterabschnitts (19, 20) und die jeweilige Umfangsfläche des obigen Wulstrastmittels (15, 16), den Schritt des Anhängens einer oder mehrerer Innenkarkasschicht-Lage(n) an die Umfangsfläche des obigen Zentralabschnitts (18) so, daß beide Seitenkarkasslagen durch die Seitenabschnitte derselben bedeckt sind, den Schritt des Rastens eines Wulsts (1) durch Erhöhen des Durchmessers des Wulstrastmittels (15, 16) nach Einsetzen des Wulsts (1) über dem Wulstrastmittel (15, 16) an jeder Seite, den Schritt des Formens der Innenkarkasslahge (3) in eine Toroidform durch Aufblähen der inneren Karkasslage (2) mittels des Aufblähmittels (18) und gleichzeitig durch Bewegen beider Trommelschulterabschnitte (15, 16) in der Axialrichtung näher zueinander, den Schritt des Aufschlagens beider Seitenabschnitte (3a) der Innenkarkasslage (3) und der Seitenkarkasslagen (4) nach außen um den Wulst (1) durch das Lagen-Aufschlagmittel (19, 20) und des Anhängens derselben an die innere Karkasslage (3) mit einer Toroidform und dem Schritt des Einsetzens eines einen Gürtel (5) und einen Laufstreifen (6) umfassenden Bandes (8) an der Stelle über dem oberen Umfangsbereich der Innenkarkasslage (3) mit einer Toroidform, des darauffolgenden Anhängens des Bandes (8) an den oberen Umfangsbereich der Innenkarkasschicht (3) und die Außenumfangsabschnitte der oberen Teile der beiden aufgeschlagenen Seitenkarkasslagen (4).

9. Verfahren nach Anspruch 8 zum Herstellen eines Radialreifens für Luftfahrzeug, dadurch gekennzeichnet, daß die Trommelschulterabschnitte (19, 20) an der rechten und der linken Seite um kurze Abstände in Axialrichtung so bewegt werden, daß sie voneinander weiter entfernt sind, so daß der Außendurchmesser der toroidförmigen inneren Karkasslage (3) reduziert wird, nachdem beide Seitenabschnitte (3a) der Innenkarkasslage (3) und der Seitenkarkasslagen (4) um die Wulste (1) nach oben geschlagen und an die toroidförmige innere Karkasslage (3) angehängt sind, und nachdem das den Gürtel (5) und den Laufstreifen (6) umfassende Band mittels des Übertragungsmittels über den oberen Umfangsabschnitt der toroidförmigen inneren Karkasslage (3) gesetzt ist, die Trommelschulterabschnitte (19, 20) an der rechten und der linken Seite um kurze Abstände in Axialrichtung so bewegt werden, daß sie näher zueinander kommen, so daß der Außendurchmesser der toroidförmigen Innenkarkasslage (3) erhöht und das obige Band (8) an den oberen Umfangsbereich der toroidförmigen Innenkarkasslage (3) und an den Außenumfangsbereich der oberen Abschnitte beider Seitenkarkasslagen (4) angehängt wird.

10. Verfahren zum Herstellen des Radialreifens nach Anspruch 1, dadurch gekennzeichnet, daß eine zylindrische Trommel zum Reifenaufbau verwendet wird, die ein Aufblähmittel (18) im Zentralabschnitt besitzt und Wulstrastmittel (15, 16), die fähig sind, im Durchmesser erhöht oder erniedrigt zu werden und jeweils benachbart zu dem obigen Aufblähmittel (18) und den Trommelschulterabschnitten (19, 20) an den Seiten des obigen Zentralabschnittes angeordnet sind, und Lagen-Aufwärtsschlagmittel an der Außenseite in Axialrichtung des obigen Wulstrastmittels (15, 16), und daß das Verfahren umfaßt den Schritt des Anhängens einer oder mehrerer Seitenkarkasschichtlage(n) an die obigen Trommelschulterabschnitte (19, 20) und an jede Umfangsfläche des Wulstrastmittels (15, 16) an den beiden Seiten, den Schritt des Anhängens einer oder mehrerer Innenkarkasschicht-Lage(n) (3) an die Umfangsfläche des obigen Zentralabschnitts (18) so, daß beide Seitenkarkasslagen durch deren Seitenabschnitte bedeckt werden, den Schritt des Rastens eines Wulstes (1) durch Erhöhen des Durchmessers des Wulstrastmittels (15, 16) nach Einsetzen jedes Wulstes (1) über dem jeweiligen Wulstrastmittel (15, 16), den Schritt des Einsetzens des den Gürtel (5) und den Laufstreifen (6) umfassenden Bandes (8) an einer Stelle über dem oberen Umfangsbereich der toroidförmigen Innenkarkasslage (3) mittels eines Übertragungsmittels (25), den Schritt des Umschlagens nach oben der äußeren Seitenabschnitte (3A) der Innenkarkasslage (3) und der Seitenkarkasslagen (4) um die Wulste (1) und des Anhängens derselben an die toroidförmige Innenkarkasslage (3) in einem Zustand, bevor der Außendurchmesser der Innenkarkasschicht (3) im Verlauf des Formvorganges der inneren Karkassschicht (3) in die Toroidform durch Aufblähen der inneren Karkasschicht (3) mittels des Aufblähmittels (8) und gleichzeitig durch Bewegen der beiden Trommelschulterabschnitte (19, 20) in Axialrichtung näher zueinander mit der vollen Breite des Bandes (8) in Berührung kommt, und den Schritt des Vervollständigens der Formgebung und des Pressens und Anklebens der vollen Breite des Bandes (8) an den oberen Umfangsbereich der inneren Karkasslage (3) und der oberen Abschnitte der Seitenkarkasslagen (4).

11. Verfahren nach Anspruch 10 zum Herstellen eines Radialreifens für Luftfahrzeug, dadurch gekennzeichnet, daß Seitenwände (7) an die Umfangsflächen der Trommelschulterabschnitte (19, 20) an der rechten und der linken Seite angehängt werden, nachdem das Band (8) an den Umfangsflächen der inneren Karkasslage (3) und an die Außenumfänge der oberen Abschnitte der beiden Seitenkarkasslagen angehängt sind, daraufhin mittels des Lagen-Überschlagmittels (19, 20) die Seitenwände (7) an die oberen Seitenkarkasslagen angehängt werden.

12. Verfahren nach Anspruch 10 zum Herstellen eines Radialreifens für Luftfahrzeuge, dadurch gekennzeichnet, daß die Seitenwände (7) an die Umfangsflächen der Trommelschulterabschnitte (19, 20) an der rechten und der linken Seite angehängt werden, nachdem beide Seitenabschnitte (3a) der inneren Karkasslage (3) und die Seitenkarkasslagen (4) nach oben um die Wulste (1) umgeschlagen und an der toroidförmigen inneren Karkasslage (3) angehängt sind, woraufhin die Seitenwände (7) an den obigen Seitenkarkasslagen (4) mittels der Lagen-Überschlagmittel (19, 20) angehängt werden.

13. Verfahren zum Herstellen des Radialreifens nach Anspruch 1, dadurch gekennzeichnet, daß eine zylindrische Trommel für Reifenaufbau verwendet wird, die ein Aufblähmittel (18) am zentralen Abschnitt besitzt und Wulstrastmittel (15, 16) besitzt, die befähigt sind, im Durchmesser erhöht oder erniedrigt zu werden, die jeweils benachbart zu dem obigen Aufblähmittel (18) und an den Trommelschulterabschnitten an beiden Seiten des obigen Zentralabschnitts angeordnet sind, und Lagen-Aufschlagmittel (19, 20) in Axialrichtung an der Außenseite des obigen Wulstrastmittels (15, 16), wobei das Verfahren umfaßt den Schritt des Anhängens der Seitenwände (7) an die Umfangsflächen der Trommelschulterabschnitte (19, 20) an der rechten und der linken Seite, den Schritt des Anhängens einer oder mehrerer Seitenkarkasschichtlage(n) (4) an die obere Fläche jeder Seitenwand (3) mit zwischengesetzter Polyethylenschicht, den Schritt des Anhängens einer oder mehrerer innerer Karkasschichtlage(n) (3) an die Umfangsfläche des obigen Zentralabschnitts (18), so daß die beiden Seitenkarkasslagen durch den Seitenabschnitt derselben bedeckt sind, den Schritt des Rastens eines Wulstes durch Erhöhen des Durchmessers des Wulstrastmittels (15, 16) nach Aufsetzen des Wulstes (1) über jedes Wulstrastmittel an beiden Seiten, den Schritt des Aufsetzens eines einen Gürtel (5) und einen Laufstreifen (6) umfassenden Bandes (8) mittels eines Übertragungsmittels (25) auf eine Stelle über dem oberen Umfangsbereich der toroidförmigen inneren Karkasslage (3), den Schritt des Aufschlagens der äußeren Seitenabschnitte (4a) der inneren Karkasslage und der Seitenkarkasslagen (4) um die Wulste (1) und des Anhängens derselben an die toroidförmige innere Karkasslage (3) in einem Zustand, bevor der Außendurchmesser der inneren Karkasslage (3) im Verlauf des Verformungsvorganges der inneren Karkasslage in eine Toroidform durch Aufblähen der inneren Karkasslage mittels des Aufblähmittels (18) und durch gleichzeitiges Bewegen beider Trommelabschnitte (19, 20) in Axialrichtung näher zueinander mit der vollen Breite des Bandes (8) in Berührung kommt, den Schritt des Überschlagens der oberen Hälfte jeder Seitenwand und des Abziehens der obigen Polyethylenschicht, den Schritt des Vervollständigens des Formgebungsvorganges und des Pressens und Anklebens der vollen Breite des Bandes (8) an den oberen Umfangsbereich der inneren Karkasslage (3) und der oberen Abschnitte der Seitenkarkasslagen (4) und den Schritt des Pressens und Anklebens der übergeschlagenen Abschnitte der Seitenwände (2) an die Seitenkarkasslagen (4) und die Kanten des Bandes (8).

14. Verfahren zum Herstellen des Radialreifens nach Anspruch 1, dadurch gekennzeichnet, daß eine zylindrische Trommel zum Reifenaufbau verwendet wird, die ein Aufblähmittel (18) an dem Zentralabschnitt besitzt und Wulstrastmittel (15, 16), die fähig sind, im Durchmesser erhöht oder vermindert zu werden und die jeweils benachbart zu dem obigen Aufblähmittel (18) und den Trommelschulterabschnitten (19, 20) an beiden Seiten des obigen Zentralabschnittes angeordnet sind, und Lagen-Aufschlagmittel (19, 20) in Axialrichtung an der Außenseite des obigen Wulstrastmittels (15, 16), und daß das Verfahren umfaßt den Schritt des Anhängens von Seitenwänden (7) an der Umfangsfläche der Trommelschulterabschnitte (19, 20) an der rechten und der linken Seite, den Schritt des Anhängens einer oder mehrerer Seitenkarkasschichtlage(n) (4) an die beiden obigen Trommelschulterabschnitte (19, 20) und die Umfangsflächen ders Wulstrastmittel (19, 20), den Schritt des Anhängens einer oder mehrerer innerer Karkassschichtlage(n) (3) an die Umfangsfläche des obigen Zentralabschnitts (18), so daß die beiden Seitenkarkasslagen durch die beiden Abschnitte derselben bedeckt werden, den Schritt des Rastens eines Wulstes (1) durch Erhöhen des Durchmessers des Wulstrastmittels (15, 16) nach Aufsetzen des Wulstes (1) über dem jeweiligen Wulstrastmittel an jeder Seite, den Schritt des Aufsetzens eines einen Gürtel (5) und einen Laufstreifen (6) umfassenden Bandes (8) an einer Stelle über dem oberen Umfangsbereich der toroidförmigen inneren Karkasslage (3) mittels eines Übertragungsmittels (25), den Schritt des Aufschlagens der äußeren Seitenabschnitte (3a) der inneren Karkasslage (3), der Seitenkarkasslagen (4) und der Seitenwände (7) um die Wulste (1) und des Anhängens derselben an die toroidförmige innere Karkasslage (3) in einem Zustand, bevor der Außendurchmesser der inneren Karkasslage (3) im Verlauf des Formungsvorganges der inneren Karkasschicht in eine Toroidform durch Aufblähen der inneren Karkasschicht mittels des Aufblähmittels (18) und gleichzeitiges Bewegen beider Trommelschulterabschnitte (19, 20) in Axialrichtung näher zueinander mit der vollen Breite des Bandes in Berührung kommt, und den Schritt des Vervollständigens des Formgebungsvorgangs und des Pressens und Anklebens der vollen Breite des Bandes (8) an den oberen Umfangsbereich der inneren Karkasslage (3) und die oberen Abschnitte der Seitenkarkasslagen (4).

## Revendications

1. Pneumatique à carcasse radiale destiné à un aéronef, comprenant, en coupe, une ou plusieurs couches (3) de nappes internes de carcasse formées de câblés de fibres organiques de "Nylon" ou analogues ou de câblés de fibres minérales d'acier ou analogues, disposés suivant un angle de 80 à 90° par rapport à la direction de l'équateur du pneumatique, leurs extrémités étant retournées vers l'extérieur autour d'une paire de talons (1), une bande (8) comprenant une bande de roulement (6) et plusieurs nappes sommets (5) de câblés de fibres organiques de "Nylon" ou analogues ou de câblés de fibres minérales d'acier ou analogues, disposés suivant un angle de 0 à 90° par rapport à la direction de l'équateur du pneumatique, la bande étant collée à la surface externe de la région supérieure de la nappe (3) de carcasse et les flancs (7) étant collés aux surfaces externes des deux parties latérales (3a) de la nappe interne (3) de carcasse, le pneumatique ayant une paire de couches (4) à une ou plusieurs nappes latérales de carcasse formées de câblés de fibres organiques tels que le "Nylon" ou analogues ou de câblés de fibres minérales tels que l'acier ou analogues, disposés suivant un angle de 80 à 90° par rapport à la direction de l'équateur du pneumatique, les couches (4) de la nappe latérale de carcasse étant disposées entre la nappe interne (3) de carcasse et les flancs (7), une première extrémité (4a) de chaque couche (4) de nappe latérale de carcasse étant retournée vers le bas et vers l'intérieur autour des talons (1) et l'autre extrémité (4b) étant placée entre la nappe interne (3) de carcasse et le côté de la nappe sommet (5) de la bande (8) afin que les couches (4) de nappe latérale de carcasse aient leurs autres extrémités (4b) ancrées à la bande (8), caractérisé en ce que la première extrémité (4a) de la couche (4) de nappe latérale de carcasse se termine dans la région allant du talon (1) à un emplacement de la largeur totale du pneumatique après retournement vers l'intérieur autour du talon.

2. Procédé de fabrication d'un pneumatique à carcasse radiale selon la revendication 1, caractérisé en ce qu'il met en oeuvre un tambour cylindrique (12) de confection de pneumatique qui comporte un dispositif de gonflage (18) placé dans la partie centrale et qui a des dispositifs (33, 34) de blocage de talons qui peuvent avoir un diamètre qui augmente ou qui diminue et qui sont placés près du dispositif précité de gonflage (18) et dans les parties d'épaulement de tambour des deux côtés de la partie centrale précitée, et des dispositifs (19, 20) de retournement de nappe placés à l'extérieur, en direction axiale, des dispositifs (33, 34) de blocage de talons, et le procédé comprend une étape d'assemblage d'une ou plusieurs couches de nappe latérale de carcasse, formées de câblés de fibres organiques tels que le "Nylon" ou analogues ou de câblés de fibres minérales tels que l'acier ou analogues, disposés suivant un angle de 80 à 90° par rapport à la direction de l'équateur du pneumatique, sur les surfaces circonférentielles des parties précitées d'épaulement de tambour (19, 20) et les surfaces circonférentielles des dispositifs précités (33, 34) de blocage de talons, une étape de collage d'une ou plusieurs couches (3) de nappe interne de carcasse comprenant des câblés de fibres organiques, tels que le "Nylon" ou analogues ou de câblés de fibres minérales tels que l'acier ou analogues, disposés suivant un angle de 80 à 90° par rapport à la direction de l'équateur du pneumatique, sur la surface circonférentielle de la partie centrale précitée (18) afin que les deux nappes latérales (4) de carcasse soient recouvertes par leurs parties latérales, une étape de maintien de talons par augmentation du diamètre des dispositifs (33, 34) de blocage de talons après positionnement des talons sur les dispositifs (33, 34) de blocage de talons des deux côtés, une étape de mise en forme de la nappe interne (3) de carcasse afin qu'elle prenne une configuration toroïdale, par gonflage de la nappe interne (3) de carcasse à l'aide du dispositif de gonflage (19) et simultanément par déplacement des deux parties (13, 14) d'épaulement de tambour afin qu'elles se rapprochent en direction axiale, une étape de retournement des deux parties latérales (3a) de la nappe interne (3) de carcasse et des nappes latérales (4) de carcasse radialement vers l'extérieur autour des talons (1) par utilisation des dispositifs de retournement de nappe, et de collage de ces nappes sur la nappe interne (3) de carcasse ayant une forme toroïdale, et une étape de fixation d'une bande (9) comprenant une bande de roulement (6) et plusieurs nappes sommet (5) contenant des câblés de fibres organiques tels que le "Nylon" ou analogues ou de câblés de fibres minérales tels que l'acier ou analogues, disposés suivant un angle de 0 à 90° par rapport à la direction de l'équateur du pneumatique, sur la région circonférentielle supérieure de la nappe interne (3) de carcasse ayant une forme toroïdale et sur les parties circonférentielles externes des parties supérieures des deux nappes latérales de carcasse qui ont été retournées, à l'aide d'un dispositif de transfert (25).

3. Procédé selon la revendication 2, destiné à la fabrication d'un pneumatique à carcasse radiale pour aéronef, caractérisé en ce que les deux parties latérales (3a) de la nappe interne (3) de carcasse et les nappes latérales (4) de carcasse sont retournées autour du talon (1) et collées à la nappe toroïdale interne (3) de carcasse, et les parties (13, 14) d'épaulement de tambour sont écartées dans la direction axiale d'une faible distance afin que le diamètre externe (OD) de la nappe interne toroïdale (3) de carcasse soit réduit, puis la bande (8) comprenant la nappe sommet (5) et la bande de roulement (6) est placée sur la région circonférentielle supérieure de la nappe toroïdale interne (3) de carcasse par le dispositif de transfert (25) après que les parties (13, 14) de tambour ont été déplacées vers l'intérieur dans la direction axiale sur une faible distance afin que la bande (8) soit collée à la région circonférentielle supérieure de la nappe toroïdale (3) de carcasse et aux circonférences externes des parties supérieures des deux nappes latérales retournées de carcasse (3a).

4. Procédé selon la revendication 2 ou 3, destiné à la fabrication d'un pneumatique à carcasse radiale pour aéronef, caractérisé en ce que les flancs (7) sont collés aux surfaces circonférentielles (19, 20) des parties (13, 14) d'épaulement de tambour à droite et à gauche après collage de la bande (8) aux circonférences externes de la nappe interne (3) de carcasse et aux circonférences externes des parties supérieures des deux nappes latérales (3) de carcasse, et ultérieurement les flancs (7) sont collés à nouveau aux nappes latérales précitées de carcasse par les dispositifs de retournement de nappe (19, 20).

5. Procédé selon la revendication 2 ou 3, destiné à la fabrication d'un pneumatique à carcasse radiale pour aéronef, caractérisé en ce que les deux parties latérales (3a) de la nappe interne (3) de carcasse et les nappes latérales (4) de carcasse sont retournées vers l'extérieur autour des talons (1) et sont collées à la nappe interne toroïdale (3) de carcasse, puis les flancs (7) sont collés à la surface circonférentielle des parties (19, 20) d'épaulement de tambour à droite et à gauche, et les flancs (2) sont ensuite collés aux nappes latérales (4) de carcasse par le dispositif (19, 20) de retournement de nappe.

6. Procédé de fabrication d'un pneumatique à carcasse radiale selon la revendication 1, caractérisé en ce qu'il met en oeuvre un tambour cylindrique pour la confection du pneumatique, le tambour comprenant un dispositif de gonflage (18) occupant la position centrale (18) et ayant des dispositifs (15, 16) de blocage de talons dont le diamètre peut être accru ou réduit et qui sont placés près du dispositif précité de gonflage (18) et dans les parties d'épaulement du tambour des deux côtés de la partie centrale (18), et des dispositifs (19, 20) de retournement de nappe placés à l'extérieur des dispositifs (15, 16) de blocage de talons, dans la direction axiale, et le procédé comprend une étape de collage des flancs (7) aux surfaces circonférentielles des parties (19, 20) d'épaulement de tambour à droite et à gauche, une étape de collage d'une ou plusieurs couches de nappe latérale de carcasse à la surface supérieure de chaque flanc, avec introduction d'une feuille de polyéthylène entre l'étape de collage d'une ou plusieurs couches de nappe interne de carcasse à la surface circonférentielle de la partie centrale précitée (18) afin que les deux nappes latérales de carcasse soient recouvertes par leurs parties latérales, une étape de blocage d'un talon (1) après positionnement du talon sur les dispositifs (15, 16) de blocage de talons, à chaque étape de mise en forme de la nappe interne (3) de carcasse sous forme toroïdale par gonflage de la nappe interne de carcasse à l'aide du dispositif de gonflage (18) et avec déplacement simultané des deux parties (19, 20) d'épaulement de tambour afin qu'elles se rapprochent en direction axiale, une étape de retournement des deux parties latérales (3a) de la nappe interne (3) de carcasse et des nappes latérales (4) de carcasse et des flancs (7) vers l'extérieur autour du talon (1) et de collage de ceux-ci à la nappe interne (3) de carcasse qui a sa forme toroïdale, une étape de retournement de la moitié supérieure de chaque flanc et de séparation de la feuille de polyéthylène, une étape de positionnement d'une bande (8) comportant une nappe sommet (5) et une bande de roulement (6) en position au-dessus de la région circonférentielle supérieure de la nappe interne de carcasse qui a une forme toroïdale, et de collage ultérieur de la bande (8) à la région circonférentielle supérieure de la nappe interne (3) de carcasse et aux parties circonférentielles externes des parties supérieures des deux nappes latérales retournées (4) de carcasse, et une étape de pressage et de collage des parties retournées des flancs sur les nappes latérales de carcasse et les bords de la bande (8).

7. Procédé selon la revendication 6, destiné à la fabrication d'un pneumatique à carcasse radiale pour aéronef, caractérisé en ce que les parties (19, 20) d'épaulement de tambour, à droite et à gauche, sont déplacées d'une courte distance dans la direction axiale afin qu'elles se séparent, si bien que le diamètre externe de la nappe interne toroïdale (3) de carcasse est réduit après retournement de la moitié supérieure de chaque flanc et que la feuille de polyéthylène est séparée, et ensuite, la bande (8) comprenant la nappe sommet (5) et la bande de roulement (6) est positionnée sur la région circonférentielle supérieure de la carcasse interne toroïdale (3), les parties (19, 20) d'épaulement de tambour des côtés droit et gauche sont déplacées de courtes distances dans la direction axiale afin qu'elles se rapprochent et que le diamètre externe de la nappe interne toroïdale (3) de carcasse augmente, et la bande précitée (8) est collée à la région circonférentielle supérieure de la nappe interne toroïdale (3) de carcasse et à la circonférence externe des parties supérieures des deux nappes latérales (4) de carcasse.

8. Procédé de fabrication d'un pneumatique à carcasse radiale selon la revendication 1, caractérisé en ce qu'il met en oeuvre un tambour cylindrique de confection de pneumatique qui comporte un dispositif (18) de gonflage placé dans la partie centrale et qui a des dispositifs (15, 16) de blocage de talons capables d'augmenter ou de diminuer de diamètre et qui sont placés près du dispositif précité de gonflage (18) et dans les parties d'épaulement de tambour des deux côtés de la partie centrale précitée (18), et des dispositifs (19, 20) de retournement de nappe placés à l'extérieur, en direction axiale, des dispositifs précités (15, 16) de blocage de talons, et le procédé comprend une étape de collage de flancs (7) aux surfaces circonférentielles des parties (19, 20) d'épaulement de tambour à droite et à gauche, une étape de collage d'une ou plusieurs couches (3a) de nappes latérales de carcasse aux surfaces circonférentielles des parties précitées d'épaulement de tambour (19, 20) et à la surface circonférentielle des dispositifs (15, 16) de blocage de talons, à chaque étape de collage d'une ou plusieurs couches de nappe interne de carcasse à la surface circonférentielle de la partie centrale (18) afin que les deux nappes latérales de carcasse soient recouvertes par leurs parties latérales, une étape de blocage du talon (1) par augmentation du diamètre des dispositifs (15, 16) de blocage de talons après positionnement des talons (1) sur les dispositifs (15, 16) de blocage de talons de chaque côté, une étape de mise en forme de la nappe interne (3) de carcasse afin qu'elle prenne une forme toroïdale par gonflage de la nappe interne (2) de carcasse à l'aide du dispositif de gonflage (18) et par déplacement simultané des deux parties (15, 16) d'épaulement de tambour afin qu'elles se rapprochent en direction axiale, une étape de retournement des deux parties latérales (3a) de la nappe interne (3) de carcasse et des nappes latérales (4) de carcasse vers l'extérieur autour du talon (1) par les dispositifs (19, 20) de retournement de nappe, et de collage de ces nappes à la nappe interne (3) de carcasse qui a une forme toroïdale, et une étape de positionnement d'une bande (8) comprenant une nappe sommet (5) et une bande de roulement (6) en position au-dessus de la région circonférentielle supérieure de la nappe interne (3) de carcasse ayant une forme toroïdale et de collage ultérieur de la bande (8) à la région circonférentielle supérieure de la nappe interne (3) de carcasse et aux parties circonférentielles externes des parties supérieures des deux nappes latérales retournées (4) de carcasse.

9. Procédé selon la revendication 8 destiné à la fabrication d'un pneumatique à carcasse radiale pour aéronef, caractérisé en ce que les parties d'épaulement de tambour (19, 20) placées à droite et à gauche sont déplacées de courtes distances dans la direction axiale afin qu'elles s'écartent l'une de l'autre si bien que le diamètre externe de la nappe interne toroïdale (3) de carcasse est réduit après que les deux parties latérales (3a) de la nappe interne (3) de carcasse et les nappes latérales (4) de carcasse ont été retournées autour des talons (1), et adhèrent à la nappe interne toroïdale (3) de carcasse et, ultérieurement, la bande comprenant la nappe sommet (5) et la bande de roulement (6) est placée sur la région circonférentielle supérieure de la nappe interne toroïdale (3) de carcasse par le dispositif de transfert, les parties d'épaulement de tambour (19, 20) placées à droite et à gauche étant déplacées de faibles distances en direction axiale afin qu'elles se rapprochent si bien que le diamètre externe de la nappe interne toroïdale (3) de carcasse augmente et que la bande précitée (8) est collée à la région circonférentielle supérieure de la nappe interne toroïdale (3) de carcasse et à la circonférence externe des parties supérieures des deux nappes latérales (4) de carcasse.

10. Procédé de fabrication du pneumatique à carcasse radiale de la revendication 1, caractérisé en ce qu'il met en oeuvre un tambour cylindrique de confection de pneumatique qui a un dispositif de gonflage (18) en position centrale et qui a des dispositifs (15, 16) de blocage de talons qui peuvent avoir un diamètre accru ou réduit et qui sont placés près du dispositif précité de gonflage (18) et au niveau de parties d'épaulement de tambour (19, 20) des deux côtés de la partie centrale, et des dispositifs de retournement de nappe placés à l'extérieur, dans la direction axiale, des dispositifs (15, 16) de blocage de talons, et le procédé comprend une étape de collage d'une ou plusieurs couches de nappes latérales de carcasse sur les parties précitées (19, 20) d'épaulement de tambour et la surface circonférentielle des dispositifs (15, 16) de blocage de talons sur chacun des deux côtés, une étape de collage d'une ou plusieurs couches (3) de nappe interne de carcasse à la surface circonférentielle de la partie centrale précitée (18) afin que les deux nappes latérales de carcasse soient recouvertes par leurs parties latérales, une étape de blocage d'un talon (1) par augmentation du diamètre des dispositifs (15, 16) de blocage de talons après positionnement du talon (1) au-dessus des dispositifs (15, 16) de blocage de talons, respectivement, une étape de positionnement de la bande (8) comprenant la nappe sommet (5) et la bande de roulement (6) en position au-dessus de la région circonférentielle supérieure de la nappe interne toroïdale (3) de carcasse à l'aide d'un dispositif de transfert (25), une étape de retournement des parties latérales externes (3a) de la nappe interne (3) de carcasse et des nappes latérales (4) de carcasse autour des talons (1) et de collage de celles-ci à la nappe interne toroïdale (3) de carcasse à un moment antérieur au contact de la circonférence externe de la nappe interne (3) de carcasse sur toute la largeur de la bande (8) au cours de l'étape de mise en forme de la nappe interne (3) de carcasse afin qu'elle prenne une forme toroïdale par gonflage de la nappe interne (3) de carcasse par le dispositif de gonflage (18) et de déplacement simultané des deux parties (19, 20) d'épaulement de tambour afin qu'elles se rapprochent en direction axiale, et une étape de terminaison de l'opération de mise en forme et de pressage et de collage de la bande (8) sur toute sa largeur à la région circonférentielle supérieure de la nappe interne (3) de carcasse et aux parties supérieures des nappes latérales (4) de carcasse.

11. Procédé selon la revendication 10, destiné à la fabrication d'un pneumatique à carcasse radiale pour aéronef, caractérisé en ce que les flancs (7) sont collés aux surfaces circonférentielles des parties (19, 20) d'épaulement de tambour à droite et à gauche après que la bande (8) a été collée aux surfaces circonférentielles de la nappe interne (3) de carcasse et à la circonférence externe des parties supérieures des deux nappes latérales de carcasse, et ultérieurement les flancs (7) sont collés aux nappes latérales précitées de carcasse à l'aide des dispositifs de retournement (19, 20).

12. Procédé selon la revendication 10, destiné à la fabrication d'un pneumatique à carcasse radiale pour aéronef, caractérisé en ce que les flancs (7) sont collés aux surfaces circonférentielles des parties (19, 20) d'épaulement de tambour à droite et à gauche après que les parties latérales (3a) de la nappe interne (3) de carcasse et les nappes latérales (4) de carcasse ont été retournées autour des talons (11) et collées à la nappe interne toroïdale (3) de carcasse après collage des flancs (7) aux nappes latérales (4) de carcasse par les dispositifs de retournement de nappe (19, 20).

13. Procédé de fabrication du pneumatique à carcasse radiale de la revendication 1, caractérisé en ce qu'il met en oeuvre un tambour cylindrique pour la confection du pneumatique, le tambour ayant un dispositif de gonflage (18) dans sa position centrale et ayant des dispositifs (15, 16) de blocage de talons dont le diamètre peut augmenter ou diminuer et qui sont placés respectivement près du dispositif de gonflage (18) et des parties d'épaulement de tambour des deux côtés de la partie centrale, et des dispositifs (19, 20) de retournement de nappe placés à l'extérieur des dispositifs (15, 16) de blocage de talons dans la direction axiale, le procédé comprenant une étape de collage des flancs (7) aux surfaces circonférentielles des parties (19, 20) d'épaulement de tambour à droite et à gauche, une étape de collage d'une ou plusieurs couches (4) de nappes latérales de carcasse à la face supérieure de chaque flanc (3), avec introduction d'une feuille de polyéthylène, une étape de collage d'une ou plusieurs couches (3) de nappe interne de carcasse à la surface circonférentielle de la partie centrale précitée (18) afin que les deux nappes latérales de carcasse soient recouvertes par leur partie latérale, une étape de blocage de talons par augmentation du diamètre des dispositifs (15, 16) de blocage de talons après positionnement du talon (1) au-dessus des dispositifs de blocage de talons de chaque côté, une étape de positionnement d'une bande (8) comprenant une nappe sommet (5) et une bande de roulement (6) en position au-dessus de la région circonférentielle supérieure de la nappe interne toroïdale (3) de carcasse à l'aide d'un dispositif de transfert (25), une étape de retournement des parties latérales externes (4a) de la nappe interne de carcasse et des nappes latérales (4) de carcasse autour des talons (1) et de collage de ces parties à la nappe interne toroïdale (3) de carcasse à un moment antérieur au contact de la périphérie externe de la nappe interne (3) de carcasse sur toute la largeur de la bande (8) au cours de l'opération de mise en forme de la nappe interne de carcasse afin qu'elle prenne une forme toroïdale, par gonflage de la nappe interne de carcasse avec le dispositif de gonflage (18) et simultanément par rapprochement des deux parties (19, 20) d'épaulement de tambour dans la direction axiale, une étape de retournement de la moitié supérieure de chaque flanc et de séparation de la feuille précitée de polyéthylène, une étape de terminaison de l'opération de mise en forme et de pressage et de collage de la bande (8) sur toute sa largeur sur la région circonférentielle supérieure de la nappe interne (3) de carcasse et sur les parties supérieures des nappes latérales (4) de carcasse, et une étape de pressage et de collage des parties retournées des flancs (2) sur les nappes latérales (4) de carcasse et les bords de la bande (8).

14. Procédé de fabrication d'un pneumatique à carcasse radiale selon la revendication 1, caractérisé en ce qu'il met en oeuvre un tambour cylindrique destiné à la confection d'un pneumatique, ayant un dispositif de gonflage (18) en position centrale et ayant des dispositifs (15, 16) de blocage de talons dont le diamètre peut augmenter ou diminuer et qui sont placés respectivement près du dispositif (18) de gonflage et de parties (19, 20) d'épaulement de tambour des deux côtés de la partie centrale, et des dispositifs (19, 20) de retournement de nappe placés à l'extérieur dans la direction axiale des dispositifs précités (15, 16) de blocage de talons, le procédé comprenant une étape de collage des flancs (7) à la surface circonférentielle des parties d'épaulement de tambour (19, 20) à droite et à gauche, une étape de collage d'une ou plusieurs couches (4) de nappes latérales de carcasse aux parties d'épaulement de tambour (19, 20) et à la surface circonférentielle des dispositifs (19, 20) de blocage de talons de chaque côté, une étape de collage d'une ou plusieurs couches (3) de nappe interne de carcasse à la surface circonférentielle de la partie centrale précitée (18) afin que les deux nappes latérales de carcasse soient recouvertes par leurs parties latérales, une étape de blocage d'un talon (1) par augmentation du diamètre des dispositifs (15, 16) de blocage de talons après positionnement du talon (1) au-dessus des dispositifs de blocage de talons de chaque côté, une étape de positionnement d'une bande (8) comprenant une nappe sommet (5) et une bande de roulement (6) en position au-dessus de la région circonférentielle supérieure de la nappe toroïdale interne (3) de carcasse à l'aide d'un dispositif de transfert (25), une étape de retournement des parties latérales externes (3a) de la nappe interne (3) de carcasse, des nappes latérales (4) de carcasse et des flancs (7) autour des talons (1) et de collage de ceux-ci à la nappe interne toroïdale (3) de carcasse à un moment antérieur au contact de la périphérie externe de la nappe interne (3) de carcasse avec toute la largeur de la bande (8) au cours de l'opération de mise en forme de la nappe interne de carcasse afin qu'elle prenne une forme toroïdale par gonflage de la nappe interne de carcasse à l'aide du dispositif de gonflage (18) et simultanément par rapprochement des deux parties d'épaulement de tambour (19, 20) en direction axiale, et une étape de terminaison de l'opération de mise en forme et de pressage et de collage de la bande (8) sur toute sa largeur sur la région circonférentielle supérieure de la nappe interne (3) de carcasse et sur les parties supérieures des nappes latérales (4) de carcasse.

# F I G . 1

# F I G. 2

# FIG.3(a)

# FIG.3(b)

# FIG.3(c)

# F I G . 3 (d)

# F I G . 3 (e)

# F I G . 3(f)

# F I G . 3(g)

# FIG.3(h)

# FIG.3(i)

# F I G . 4

$\ell_1$

$42$

$\ell_2$

$43$

$41$

# F I G . 5

UC

CH

$44$

# F I G . 6

$44$